# EUROPEAN PATENT APPLICATION

(11) **EP 4 814 441 A1**
(43) Date of publication of application: **30.09.2026**
(21) Application number: 26166626.7
(22) Date of filing: 23.03.2026
(51) Int. Cl.: G01C 19/5621, G01C 19/5656

(54) **PHYSICAL QUANTITY DETECTION ELEMENT, PHYSICAL QUANTITY DETECTION DEVICE, AND METHOD OF MANUFACTURING PHYSICAL QUANTITY DETECTION ELEMENT**

(30) Priority: 28.03.2025 JP 2025055272
(71) Applicant: Seiko Epson Corporation, Tokyo 160-8801 (JP)
(72) Inventor: SASAKI, Shogo, Suwa-shi, Nagano, 392-8502 (JP)
(74) Representative: MERH-IP Matias Erny Reichl Hoffmann Patentanwälte PartG mbB

(57) **Abstract**

A physical quantity detection element includes a vibrating substrate including a base portion, a plurality of vibrating arms coupled to the base portion, and a protrusion portion protruding from a side surface of the base portion, and a first detection electrode, a second detection electrode, a third detection electrode, a fourth detection electrode, a drive electrode, and a drive constant potential electrode disposed on any one of the plurality of vibrating arms, in which a wiring separation portion configured to separate any one of the first detection electrode, the second detection electrode, the third detection electrode, and the fourth detection electrode from the drive constant potential electrode is disposed on a side surface of the protrusion portion, and the drive electrode is disposed, in a plan view of the base portion, on a side opposite to the wiring separation portion side of the protrusion portion.

## Description

The present application is based on, and claims priority from JP Application Serial Number 2025-055272, filed March 28, 2025, the disclosure of which is hereby incorporated by reference herein in its entirety.

### BACKGROUND

### 1. Technical Field

The present disclosure relates to a physical quantity detection element, a physical quantity detection device, and a method of manufacturing a physical quantity detection element.

### 2. Related Art

For example, a vibration element as an angular velocity sensor described in JP-A-2015-184124 has a vibrating substrate including a base portion, a first detection arm and a second detection arm extending from the base portion to both sides in a Y-axis direction, a first coupling arm and a second coupling arm extending from the base portion to both sides in an X-axis direction, a pair of first drive arms extending from a tip end portion of the first coupling arm to both sides in the Y-axis direction, a pair of second drive arms extending from a tip end portion of the second coupling arm to both sides in the Y-axis direction, a pair of support portions, and beam portions coupling the base portion and the respective support portions.

In addition, the vibration element includes first detection electrodes disposed on both principal surfaces of the first detection arm, second detection electrodes disposed on both side surfaces of the first detection arm, third detection electrodes disposed on both principal surfaces of the second detection arm, fourth detection electrodes disposed on both side surfaces of the second detection arm, drive input electrodes disposed on both principal surfaces of each of the first drive arms and on both side surfaces of each of the second drive arms, and drive output electrodes disposed on both side surfaces of each of the first drive arms and on both principal surfaces of each of the second drive arms. The first detection electrode and the fourth detection electrode having the same electrical polarity are both coupled to a first charge amplifier, and the second detection electrode and the third detection electrode having the same electrical polarity are both coupled to a second charge amplifier. According to such a configuration, since the amount of charge (amount of current) input to the detection circuit increases, the detection sensitivity of the angular velocity is improved.

However, in the vibration element disclosed in JP-A-2015-184124, any one of the first detection electrode, the second detection electrode, the third detection electrode, and the fourth detection electrode tends to be close to a drive input electrode, and in some cases capacitive coupling therebetween becomes strong. As a result, noise is likely to be superimposed on a detection signal, and thus detection accuracy of an angular velocity may decrease.

### SUMMARY

A physical quantity detection element according to the present disclosure includes a vibrating substrate including a base portion, a plurality of vibrating arms coupled to the base portion, and a protrusion portion protruding from a side surface of the base portion, and a first detection electrode, a second detection electrode, a third detection electrode, a fourth detection electrode, a drive electrode, and a drive constant potential electrode disposed on any one of the plurality of vibrating arms, in which a wiring separation portion configured to separate any one of the first detection electrode, the second detection electrode, the third detection electrode, and the fourth detection electrode from the drive constant potential electrode is disposed on a side surface of the protrusion portion, and the drive electrode is disposed, in a plan view of the base portion, on a side opposite to the wiring separation portion side of the protrusion portion.

A physical quantity detection device according to the present disclosure includes the above physical quantity detection element, and a circuit element including a drive circuit configured to drive the physical quantity detection element and a detection circuit configured to detect a physical quantity based on a detection signal from the physical quantity detection element.

A method of manufacturing a physical quantity detection element according to the present disclosure includes a substrate preparation step of preparing a vibrating substrate including a base portion, a plurality of vibrating arms coupled to the base portion, and a protrusion portion protruding from a side surface of the base portion, a metal film forming step of forming a metal film on the vibrating substrate, and an electrode forming step of forming a first detection electrode, a second detection electrode, a third detection electrode, a fourth detection electrode, a drive electrode, and a drive constant potential electrode by patterning the metal film, in which in the electrode forming step, one of the first detection electrode, the second detection electrode, the third detection electrode, and the fourth detection electrode is separated from the drive constant potential electrode by removing the metal film positioned on a side surface of the protrusion portion.

### BRIEF DESCRIPTION OF THE DRAWINGS

FIG. 1 is a sectional view of a physical quantity detection device according to a first embodiment.
FIG. 2 is a top view illustrating an inside of a package of the physical quantity detection device.
FIG. 3 is a top view illustrating a top surface of an angular velocity sensor element.
FIG. 4 is a transparent view illustrating a lower surface of the angular velocity sensor element.
FIG. 5 is a sectional view taken along the line V-V in FIG. 3.
FIG. 6 is a sectional view taken along line VI-VI in FIG. 3.
FIG. 7 is a perspective view of the angular velocity sensor element.
FIG. 8 is a perspective view of the angular velocity sensor element.
FIG. 9 is a schematic view illustrating a drive state of the angular velocity sensor element.
FIG. 10 is a schematic view illustrating a drive state of the angular velocity sensor element.
FIG. 11 is a top view of a support substrate.
FIG. 12 is a sectional view of an acceleration sensor unit.
FIG. 13 is a top view of a first sensor portion.
FIG. 14 is a top view of a second sensor portion.
FIG. 15 is a block diagram of a detection circuit.
FIG. 16 is a flowchart illustrating a manufacturing process of the angular velocity sensor element.
FIG. 17 is a top view for describing a method of manufacturing the angular velocity sensor element.
FIG. 18 is a top view for describing a method of manufacturing the angular velocity sensor element.
FIG. 19 is a top view for describing a method of manufacturing the angular velocity sensor element.
FIG. 20 is a flowchart illustrating a manufacturing process of the angular velocity sensor element according to a second embodiment.
FIG. 21 is a top view for describing a method of manufacturing the angular velocity sensor element.

### DESCRIPTION OF EMBODIMENTS

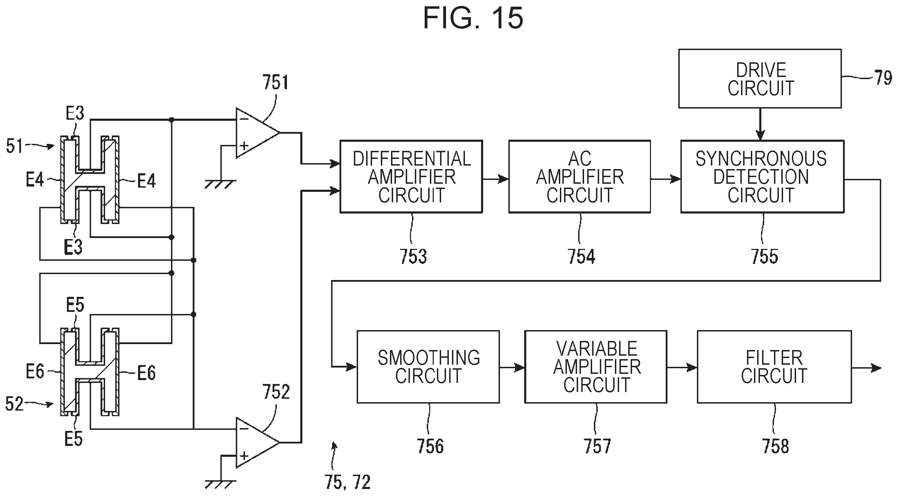

Hereinafter, a physical quantity detection element, a physical quantity detection device, and a method of manufacturing the physical quantity detection element according to the present disclosure will be described in detail based on embodiments illustrated in the accompanying drawings. For convenience of description, three axes orthogonal to each other are illustrated as an X-axis, a Y-axis, and a Z-axis in each drawing except FIGS. 15, 16, and 20. In addition, hereinafter, for convenience of description, a direction along the X-axis which is a second direction is also referred to as an "X-axis direction", a direction along the Y-axis which is a first direction is also referred to as a "Y-axis direction", and a direction along the Z-axis is also referred to as a "Z-axis direction". In addition, an arrow side of each axis is referred to as a positive side, whereas an opposite side is referred to as a negative side. A positive side in the Z-axis direction is referred to as "upward", whereas a negative side is referred to as "downward".

### First Embodiment

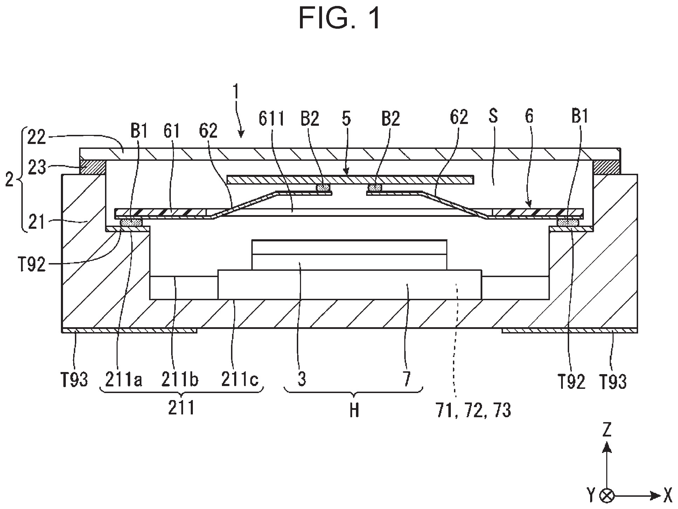

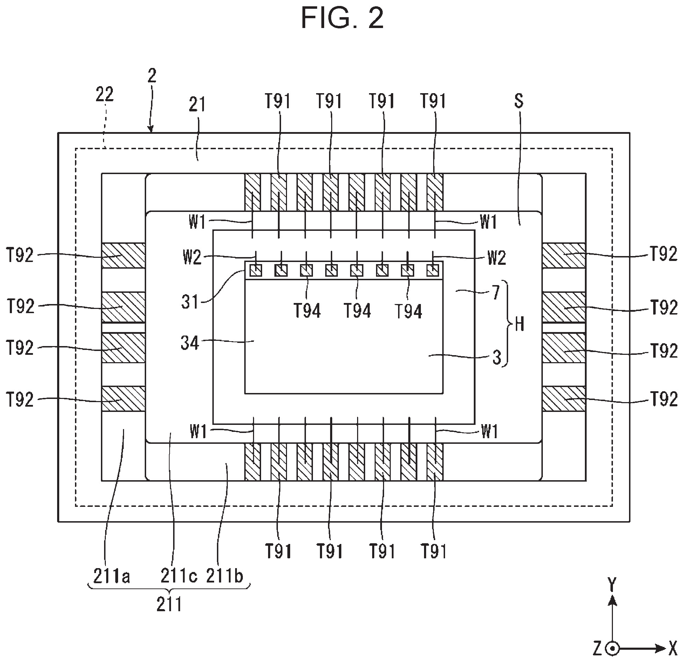

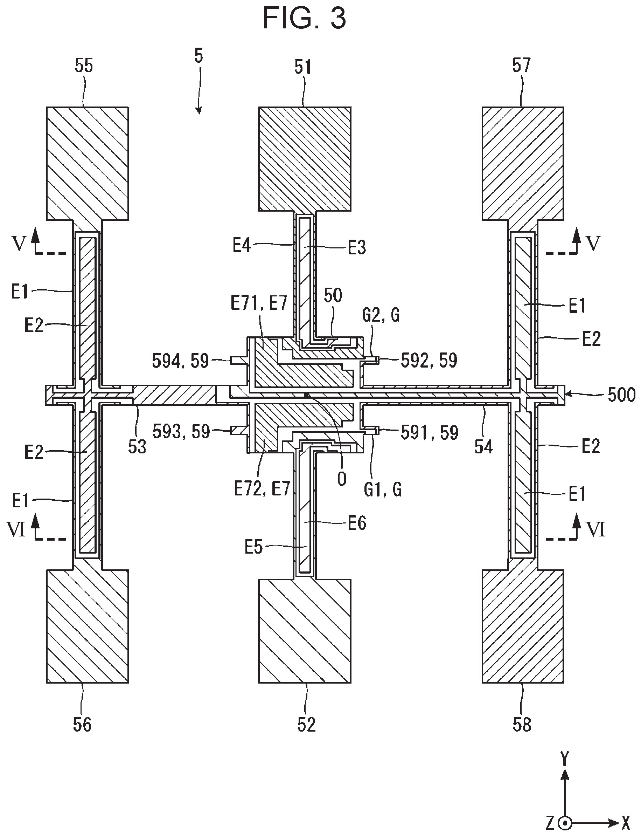

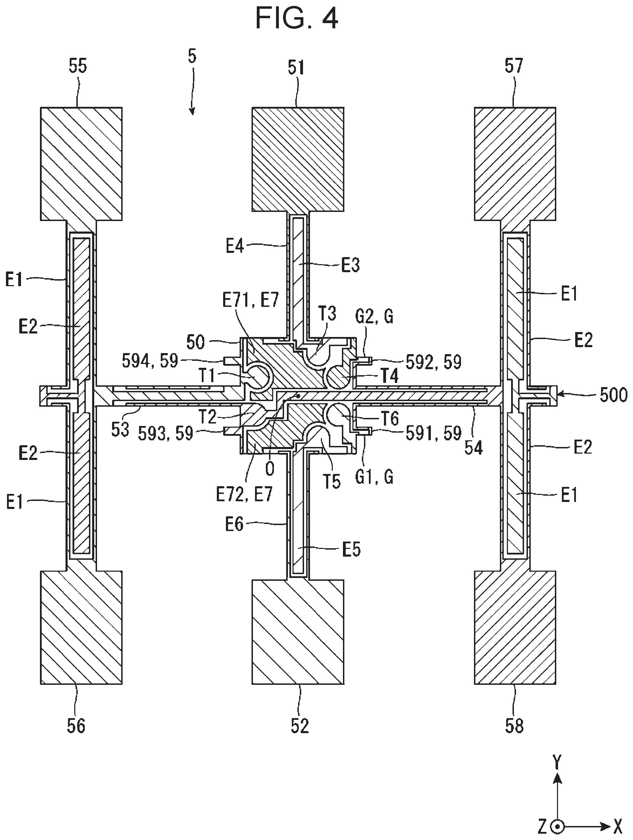

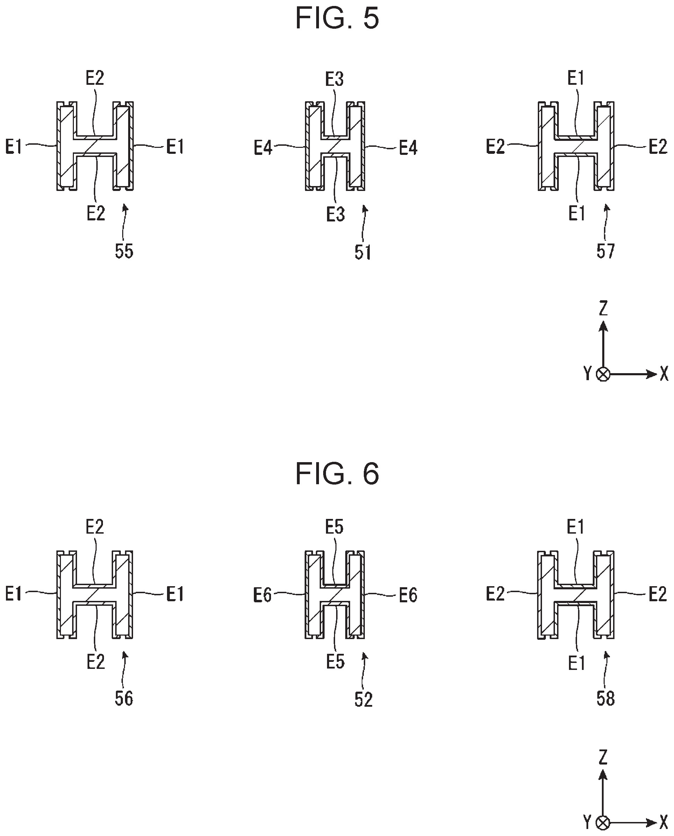

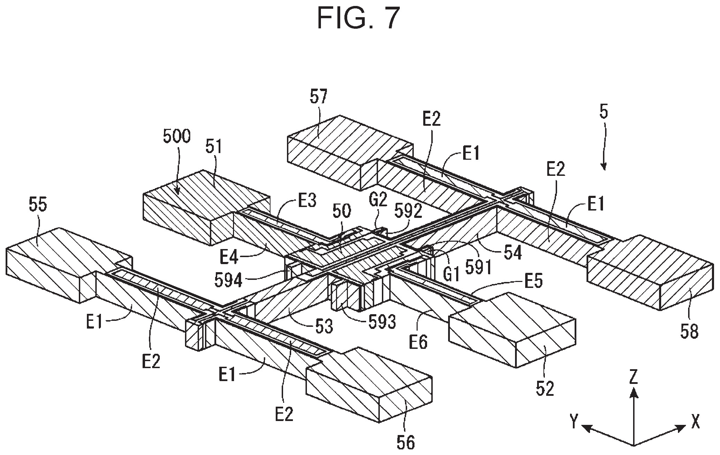

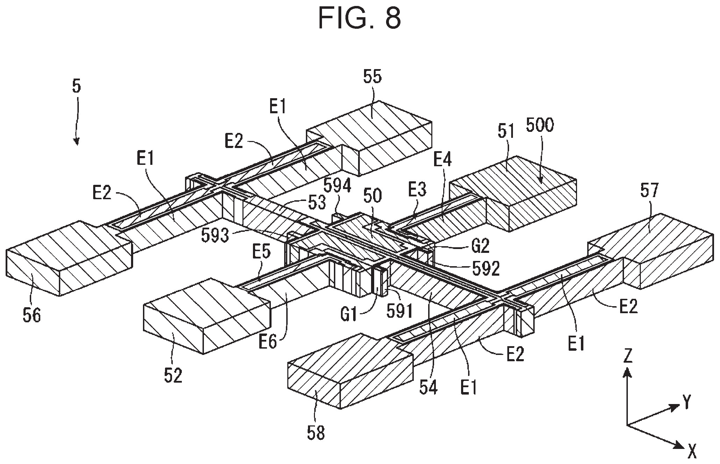

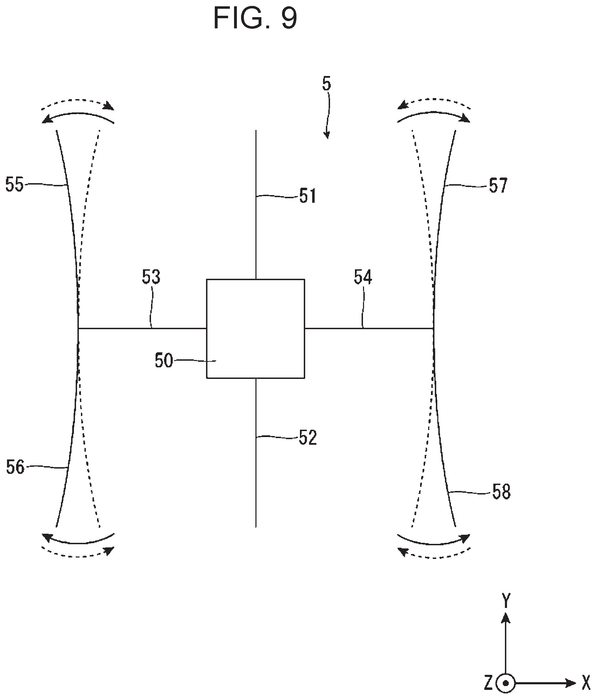

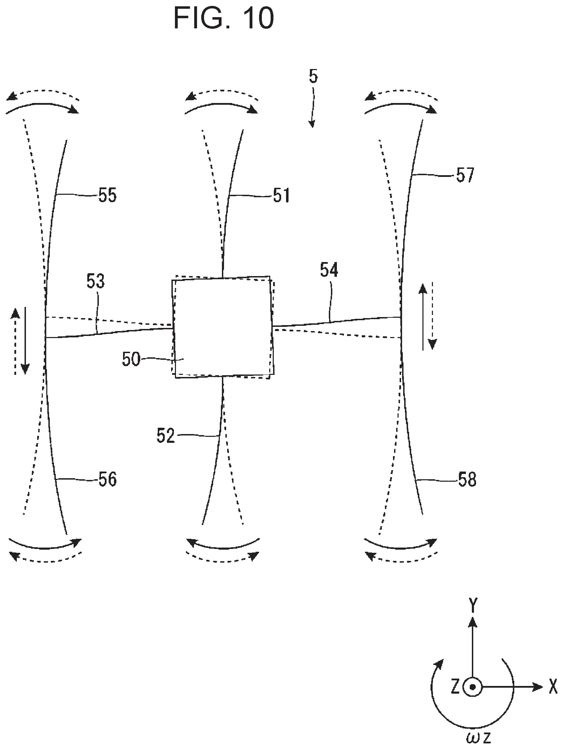

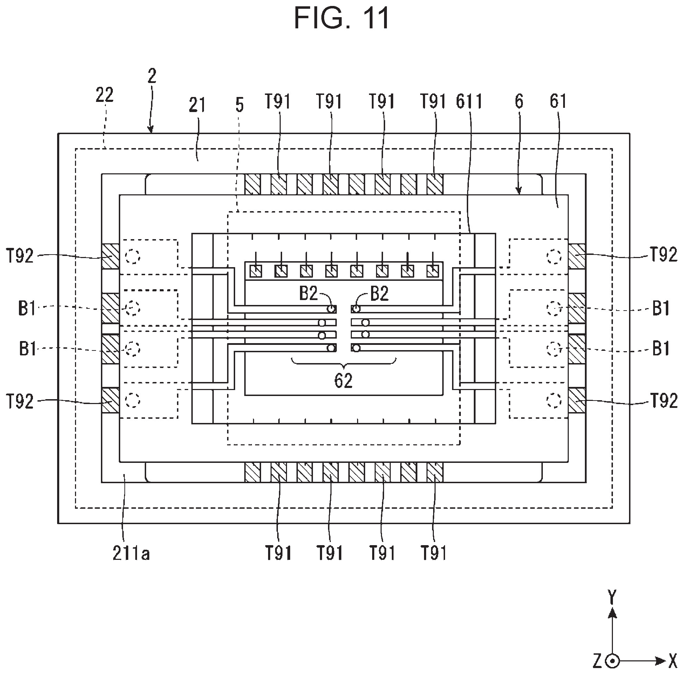

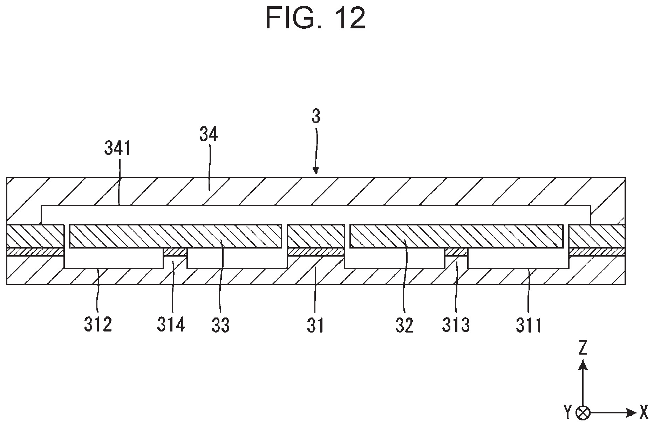

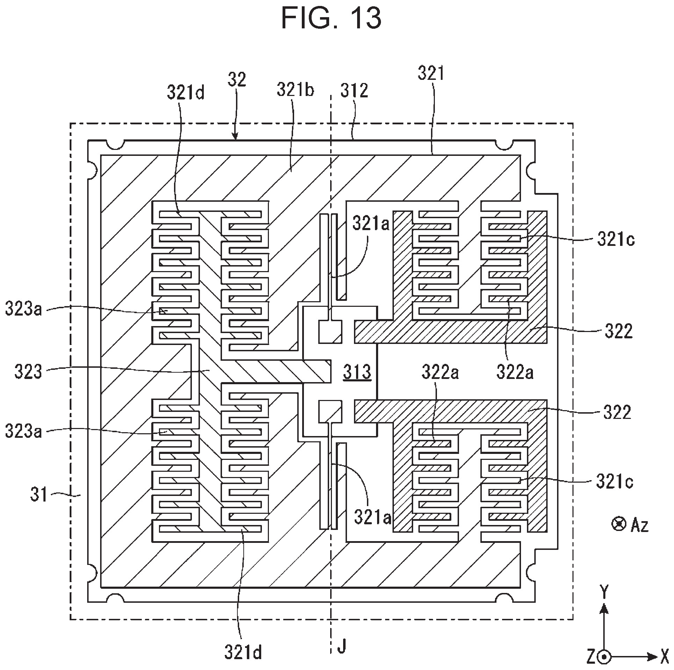

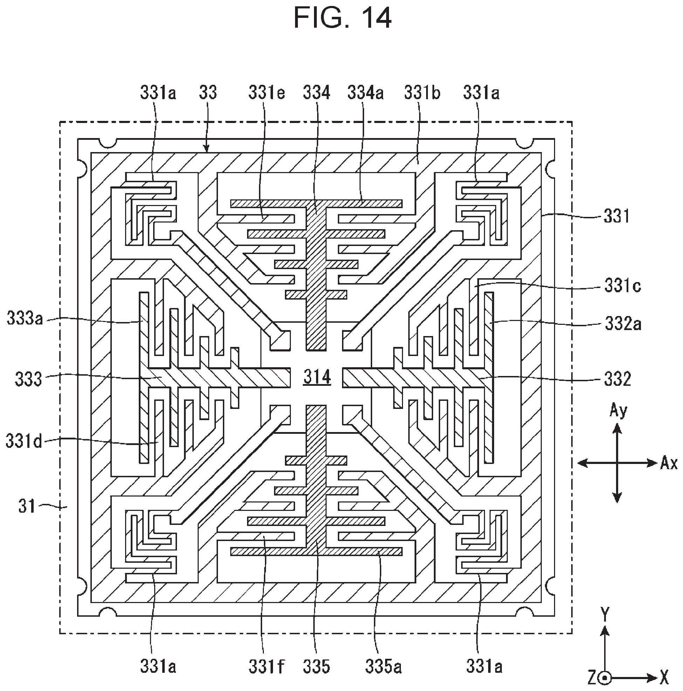

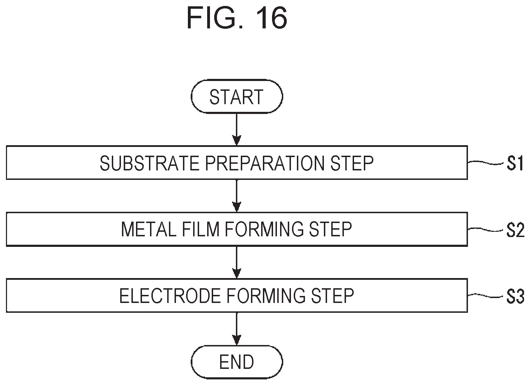

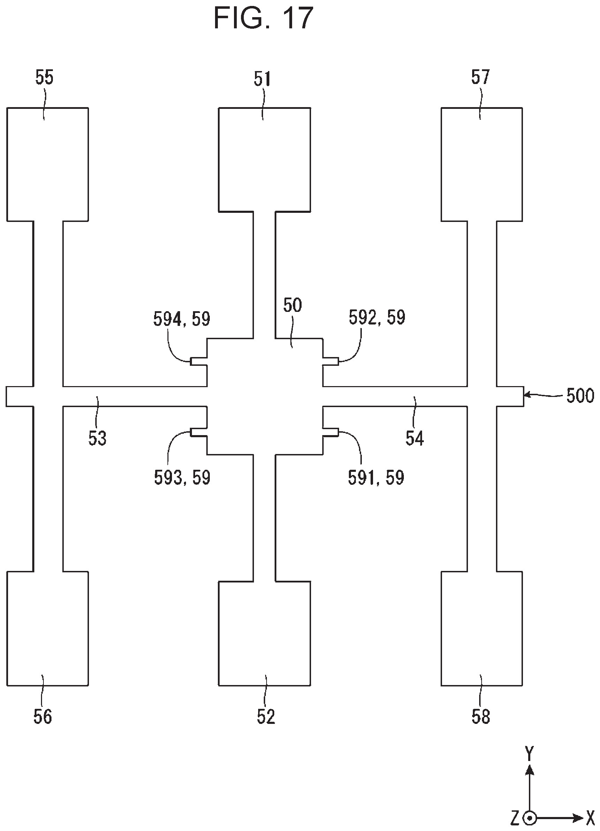

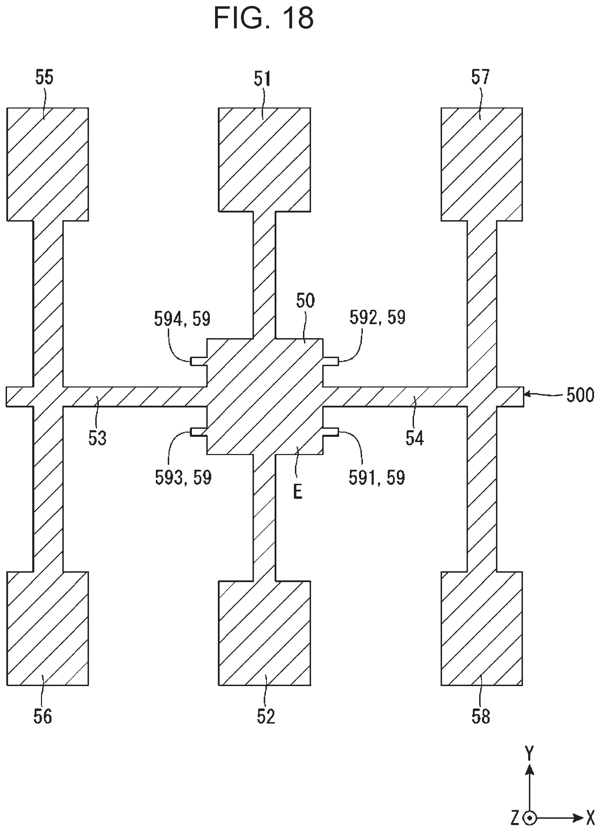

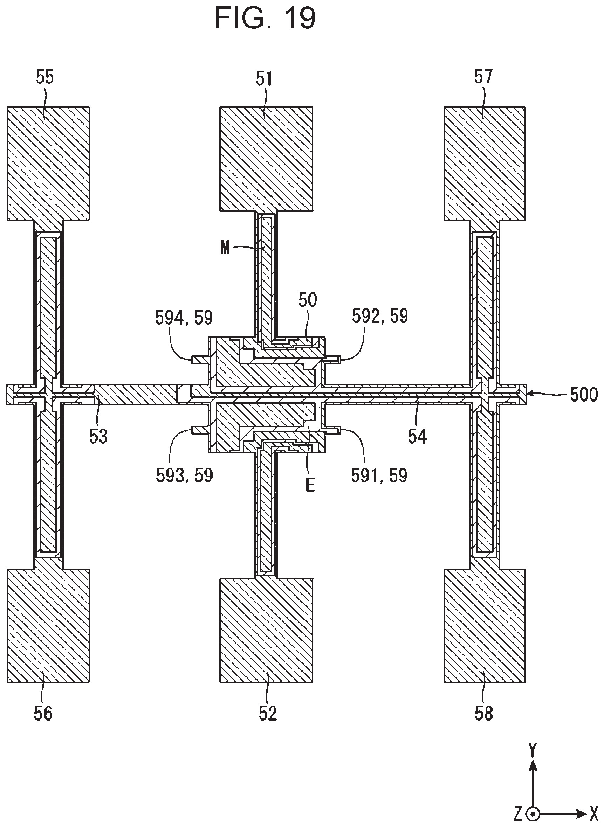

FIG. 1 is a sectional view of the physical quantity detection device according to a first embodiment. FIG. 2 is a top view illustrating an inside of a package of the physical quantity detection device. FIG. 3 is a top view illustrating a top surface of an angular velocity sensor element. FIG. 4 is a transparent view illustrating a lower surface of the angular velocity sensor element. FIG. 5 is a sectional view taken along the line V-V in FIG. 3. FIG. 6 is a sectional view taken along line VI-VI in FIG. 3. FIG. 7 is a perspective view of the angular velocity sensor element. FIG. 8 is a perspective view of the angular velocity sensor element. FIG. 9 is a schematic view illustrating a drive state of the angular velocity sensor element. FIG. 10 is a schematic view illustrating a drive state of the angular velocity sensor element. FIG. 11 is a top view of a support substrate. FIG. 12 is a sectional view of an acceleration sensor unit. FIG. 13 is a top view of a first sensor portion. FIG. 14 is a top view of a second sensor portion. FIG. 15 is a block diagram of a detection circuit. FIG. 16 is a flowchart illustrating a manufacturing process of the angular velocity sensor element. FIG. 17 is a top view for describing a method of manufacturing the angular velocity sensor element. FIG. 18 is a top view for describing a method of manufacturing the angular velocity sensor element. FIG. 19 is a top view for describing a method of manufacturing the angular velocity sensor element.

A physical quantity detection device 1 illustrated in FIG. 1 is a composite sensor for detecting acceleration and angular velocity, and includes a package 2, an acceleration sensor unit 3 accommodated in the package 2, an angular velocity sensor element 5 as a physical quantity detection element, a support substrate 6, and a circuit element 7. Hereinafter, each of the portions will be described in order.

### Package 2

As illustrated in FIGS. 1 and 2, the package 2 includes a cavity-shaped base 21 having a recessed portion 211 that is open on an upper surface, and a plate-shaped lid 22 that is bonded to an upper surface of the base 21 through a seam ring 23 and closes an opening of the recessed portion 211. An airtight accommodation space S is formed in the package 2 with the lid 22 closing the recessed portion 211, and each of the above-described portions is accommodated in the accommodation space S. Accordingly, it is possible to effectively protect the acceleration sensor unit 3, the angular velocity sensor element 5, and the circuit element 7. The accommodation space S is hermetically sealed and is in a reduced pressure state, preferably, a state closer to vacuum. As a result, viscous resistance is reduced, and vibration characteristics of the angular velocity sensor element 5 disposed in the accommodation space S in an exposed state are improved. Meanwhile, an atmosphere of the accommodation space S is not particularly limited.

A constituent material of the base 21 is not limited in particular, and for example, various ceramics such as aluminum oxide can be used. In addition, a constituent material of the lid 22 is not limited in particular but may be a member of which a coefficient of linear expansion is close to a coefficient of linear expansion of the constituent material of the base 21. For example, when the constituent material of the base 21 is ceramics, an alloy such as Kovar is preferable.

In addition, the recessed portion 211 includes a first recessed portion 211a that is open through the upper surface of the base 21, a second recessed portion 211b that is open through a bottom surface of the first recessed portion 211a and has an opening area smaller than that of the first recessed portion 211a, and a third recessed portion 211c that is open through a bottom surface of the second recessed portion 211b and has an opening area smaller than that of the second recessed portion 211b. The angular velocity sensor element 5 is disposed on the bottom surface of the first recessed portion 211a via the support substrate 6, and the circuit element 7 and the acceleration sensor unit 3 are disposed on the bottom surface of the third recessed portion 211c so as to be stacked in the Z-axis direction. Hereinafter, a stack of the circuit element 7 and the acceleration sensor unit 3 is also referred to as a "stack H".

A plurality of terminals T91 are disposed on the bottom surface of the second recessed portion 211b. Each of the terminals T91 is electrically coupled to the circuit element 7 via a conductive wire W1. A plurality of terminals T92 are disposed on the bottom surface of the first recessed portion 211a. Each of the terminals T92 is electrically coupled to the angular velocity sensor element 5 via a conductive bonding member B1 and the support substrate 6. In addition, each of the terminals T92 is electrically coupled to a corresponding terminal T91 via an internal wiring (not illustrated) formed in the base 21. Further, a plurality of external terminals T93 are disposed on the lower surface of the base 21. Each of the external terminals T93 is electrically coupled to a corresponding terminal T91 via an internal wiring (not illustrated) formed in the base 21.

### Angular Velocity Sensor Element 5

As illustrated in FIG. 1, the angular velocity sensor element 5 is disposed on an upper side of the stack H and overlaps the stack H in a plan view from the Z-axis direction. As described above, by disposing the angular velocity sensor element 5 and the stack H to overlap each other in the Z-axis direction, planar spreading of the physical quantity detection device 1 can be suppressed and a size of the physical quantity detection device 1 can be reduced. Further, since the angular velocity sensor element 5 can be disposed in a wide space positioned on the upper side of the stack H, a size of the angular velocity sensor element 5 can be easily increased, and accordingly, detection accuracy of the angular velocity sensor element 5 is improved.

The angular velocity sensor element 5 is a quartz crystal vibration element, and can detect angular velocity ωz around the Z-axis. As illustrated in FIGS. 3 and 4, the angular velocity sensor element 5 includes a base portion 50 and a plurality of vibrating arms coupled to the base portion 50. The plurality of vibrating arms include a first detection arm 51, a second detection arm 52, a first coupling arm 53, a second coupling arm 54, first drive arms 55 and 56, and second drive arms 57 and 58. Specifically, the angular velocity sensor element 5 has a vibrating substrate 500 which is a quartz crystal substrate in which the base portion 50 positioned at the center of the element, the first detection arm 51 and the second detection arm 52 extending from the base portion 50 to both sides in the Y-axis direction, the first coupling arm 53 and the second coupling arm 54 extending from the base portion 50 to both sides in the X-axis direction, a pair of first drive arms 55 and 56 extending from the tip end portion of the first coupling arm 53 to both sides in the Y-axis direction, and a pair of second drive arms 57 and 58 extending from the tip end portion of the second coupling arm 54 to both sides in the Y-axis direction are integrally formed. According to such a configuration, the angular velocity sensor element 5 having excellent vibration balance can be obtained, and the angular velocity ωz can be accurately detected.

In addition, as illustrated in FIGS. 5 and 6, in each of the first detection arm 51, the second detection arm 52, the first drive arms 55 and 56, and the second drive arms 57 and 58, a recessed portion which is opened to both principal surfaces, that is, the upper surface and the lower surface is formed. The angular velocity sensor element 5 is supported by the support substrate 6 in the base portion 50 as will be described later.

In addition, as illustrated in FIGS. 3 and 4, a vibrating substrate 500 includes a protrusion portion 59 which protrudes from the base portion 50. In addition, the protrusion portion 59 includes a first protrusion portion 591 and a second protrusion portion 592 which protrude to the positive side in the X-axis direction from the side surface of the base portion 50 facing the positive side in the X-axis direction, and a third protrusion portion 593 and a fourth protrusion portion 594 which protrude to the negative side in the X-axis direction from the side surface of the base portion 50 facing the negative side in the X-axis direction. That is, the first protrusion portion 591 and the second protrusion portion 592, and the third protrusion portion 593 and the fourth protrusion portion 594 are positioned on opposite sides to each other with respect to the base portion 50. The second protrusion portion 592 and the fourth protrusion portion 594 are positioned on the positive side in the Y-axis direction (the first detection arm 51 side) with respect to the center O of the base portion 50, and the first protrusion portion 591 and the third protrusion portion 593 are located on the negative side in the Y-axis direction (the second detection arm 52 side) with respect to the center O of the base portion 50. According to such a configuration, since the protrusion portion 59 can be disposed around the base portion 50 in a well-balanced manner, the deviation of the center of gravity from the center O can be effectively suppressed. Therefore, it is possible to suppress a decrease in the vibration balance of the angular velocity sensor element 5.

As illustrated in FIGS. 3 and 4, the angular velocity sensor element 5 has drive electrodes E1 disposed on both side surfaces of the first drive arms 55 and 56 and both principal surfaces of the second drive arms 57 and 58, drive constant potential electrodes E2 disposed on both principal surfaces of the first drive arms 55 and 56 and both side surfaces of the second drive arms 57 and 58, first detection electrodes E3 disposed on both principal surfaces of the first detection arm 51, second detection electrodes E4 disposed on both side surfaces of the first detection arm 51, third detection electrodes E5 disposed on both principal surfaces of the second detection arm 52, and fourth detection electrodes E6 disposed on both side surfaces of the second detection arm 52.

In addition, as illustrated in FIG. 4, the angular velocity sensor element 5 has six terminals disposed on the lower surface (principal surface on the support substrate 6 side) of the base portion 50. These six terminals include a drive-electrode terminal T1 electrically coupled to the drive electrode E1, a drive-constant-potential-electrode terminal T2 electrically coupled to the drive constant potential electrode E2, a first detection-electrode terminal T3 electrically coupled to the first detection electrode E3, a second detection-electrode terminal T4 electrically coupled to the second detection electrode E4, a third detection-electrode terminal T5 electrically coupled to the third detection electrode E5, and a fourth detection-electrode terminal T6 electrically coupled to the fourth detection electrode E6.

As illustrated in FIGS. 3 and 4, the angular velocity sensor element 5 includes a constant potential electrode E7 disposed on the lower surface of the base portion 50. The constant potential electrode E7 is coupled to a constant potential, in particular, the ground (GND) during operation of the physical quantity detection device 1. Such constant potential electrode E7 is divided into a first constant potential electrode E71 and a second constant potential electrode E72 by the drive constant potential electrode E2. The first constant potential electrode E71 is widely distributed in a region on the positive side in the Y-axis direction with respect to the center O, and is disposed between the first and second detection electrodes E3 and E4 and the first and second detection-electrode terminals T3 and T4, and the drive-electrode terminal T1. In addition, the second constant potential electrode E72 is widely distributed in a region on the negative side in the Y-axis direction with respect to the center O, and is disposed between the third and fourth detection electrodes E5 and E6 and the third and fourth detection-electrode terminals T5 and T6 and the drive-electrode terminal T1. According to such a configuration, capacitive coupling between the drive-electrode terminal T1 and the first to fourth detection electrodes E3 to E6 (the first to fourth detection-electrode terminals T3 to T6) can be effectively suppressed by the constant potential electrode E7. Therefore, a drive signal applied to the drive electrode E1 is less likely to be mixed into detection signals taken out from the first to fourth detection electrodes E3 to E6, and detection signals with reduced noise can be obtained. Accordingly, an angular velocity ωz can be detected with higher accuracy.

As described later, each of the electrodes E1 to E7 and each of the terminals T1 to T6 are formed by patterning a metal film E formed on the vibrating substrate 500 using a photolithography technique and an etching technique. That is, a portion where the electrodes E1 to E7 and the terminals T1 to T6 are not formed is a portion where the metal film E is removed from the vibrating substrate 500.

In addition, a wiring separation portion G that separates any one of the first detection electrode E3, the second detection electrode E4, the third detection electrode E5, and the fourth detection electrode E6 from the drive constant potential electrode E2 is disposed on a side surface of the protrusion portion 59. In a plan view of the base portion 50 (a plan view from the Z-axis direction), the drive electrode E1 on the second coupling arm 54 is disposed on a side opposite to the wiring separation portion G side of the protrusion portion 59. According to such a configuration, the drive electrode E1 is less likely to approach any one of the first detection electrode E3, the second detection electrode E4, the third detection electrode E5, and the fourth detection electrode E6, and capacitive coupling therebetween can be effectively reduced. Therefore, a drive signal applied to the drive electrode E1 is less likely to be mixed into detection signals taken out from the first to fourth detection electrodes E3 to E6, and detection signals with reduced noise can be obtained. Accordingly, an angular velocity ωz can be detected with higher accuracy.

Specifically, as illustrated in FIGS. 3 and 4, the wiring separation portion G includes a first wiring separation portion G1 disposed on the side surface of the first protrusion portion 591 and a second wiring separation portion G2 disposed on the side surface of the second protrusion portion 592. The first wiring separation portion G1 is disposed on the side surface of the first protrusion portion 591 facing the negative side in the Y-axis direction (the second detection arm 52 side), that is, the side surface facing the side opposite to the second protrusion portion 592, and the second wiring separation portion G2 is disposed on the side surface of the second protrusion portion 592 facing the positive side in the Y-axis direction (the first detection arm 51 side), that is, the side surface facing the side opposite to the first protrusion portion 591. The fourth detection electrode E6 and the drive constant potential electrode E2 are separated from each other on the side surface of the vibrating substrate 500 by the first wiring separation portion G1, and the second detection electrode E4 and the drive constant potential electrode E2 are separated from each other on the side surface of the vibrating substrate 500 by the second wiring separation portion G2.

In addition, as illustrated in FIGS. 3 and 4, the drive electrode E1 on the second coupling arm 54 is disposed on the side opposite to the first wiring separation portion G1 side of the first protrusion portion 591 in the plan view (plan view from the Z-axis direction) of the base portion 50. That is, the first wiring separation portion G1 is positioned on one side (the negative side in the Y-axis direction) of the first protrusion portion 591, and the drive electrode E1 on the second coupling arm 54 is positioned on the other side (the positive side in the Y-axis direction). According to such a configuration, it is possible to effectively suppress the approach between the drive electrode E1 and the fourth detection electrode E6, and to effectively reduce the capacitive coupling therebetween. Similarly, in the plan view of the base portion 50 (plan view from the Z-axis direction), the drive electrode E1 on the second coupling arm 54 is disposed on the side opposite to the second wiring separation portion G2 side of the second protrusion portion 592. That is, the second wiring separation portion G2 is positioned on one side (the positive side in the Y-axis direction) of the second protrusion portion 592, and the drive electrode E1 on the second coupling arm 54 is positioned on the other side (the negative side in the Y-axis direction). According to such a configuration, it is possible to effectively suppress the approach between the drive electrode E1 and the second detection electrode E4, and to effectively reduce the capacitive coupling therebetween. Therefore, the angular velocity detection accuracy of the angular velocity sensor element 5 is improved.

Here, as can be seen from FIGS. 7 and 8, in the angular velocity sensor element 5, the metal film is not removed from the vibrating substrate 500 on the side surface facing the positive side in the X-axis direction and the side surface facing the negative side in the X-axis direction. On the other hand, a part of the metal film is removed from the vibrating substrate 500 on the side surface facing the positive side in the Y-axis direction and the side surface facing the negative side in the Y-axis direction. With such a configuration, as described later, the number of exposures in the photolithography technique can be reduced, and accordingly, manufacture of the angular velocity sensor element 5 is simplified.

The configuration of the angular velocity sensor element 5 has been described above. Next, a method of detecting an angular velocity ωz by the angular velocity sensor element 5 will be described. When a drive signal is applied to the drive electrode E1, as illustrated in FIG. 9, the first drive arms 55 and 56 and the second drive arms 57 and 58 flexurally vibrate in opposite phases in the X-axis direction. Hereinafter, this state is also referred to as a "drive vibration mode". In this state, the vibration of the first drive arms 55 and 56 and the vibration of the second drive arms 57 and 58 are cancelled, and the first and second detection arms 51 and 52 do not vibrate. When the angular velocity ωz is applied to the angular velocity sensor element 5 in a state of being driven in the drive vibration mode, as illustrated in FIG. 10, the Coriolis force acts on the first and second drive arms 55, 56, 57, and 58 to excite the flexural vibration in the Y-axis direction, and the first and second detection arms 51 and 52 flexurally vibrate in opposite phases in the X-axis direction in response to the flexural vibration. Hereinafter, this state is also referred to as a "detection vibration mode".

The charges generated in the first detection arm 51 by such a detection vibration mode are extracted as detection signals from the first and second detection electrodes E3 and E4, the charges generated in the second detection arm 52 are extracted as detection signals from the third and fourth detection electrodes E5 and E6, and the angular velocity ωz is obtained based on these detection signals. In particular, according to the vibrating substrate 500 having the shape of the present embodiment, the vibration balance of the drive vibration mode is high, and the angular velocity ωz can be detected with higher accuracy. A method of processing the detection signals extracted from the first to fourth detection electrodes E3 to E6 will be described in the description of the circuit element 7 to be described later. Hereinafter, the detection signal extracted from the first detection electrode E3 is also referred to as a "first detection signal", the detection signal extracted from the second detection electrode E4 is also referred to as a "second detection signal", the detection signal extracted from the third detection electrode E5 is also referred to as a "third detection signal", and the detection signal extracted from the fourth detection electrode E6 is also referred to as a "fourth detection signal".

The angular velocity sensor element 5 has been described above, but the configuration of the angular velocity sensor element 5 is not particularly limited. For example, in the present embodiment, the first wiring separation portion G1 separates the fourth detection electrode E6 and the drive constant potential electrode E2, but the present disclosure is not limited thereto, and any one of the first, second, and third detection electrodes E3, E4, and E5 may be separated from the drive constant potential electrode E2. Similarly, the second wiring separation portion G2 separates the second detection electrode E4 from the drive constant potential electrode E2, but the disclosure is not limited thereto, and any one of the first, third, and fourth detection electrodes E3, E5, and E6 may be separated from the drive constant potential electrode E2. In addition, in the present embodiment, the protrusion portion 59 includes the first, second, third, and fourth protrusion portions 591, 592, 593, and 594, but at least one of the second, third, and fourth protrusion portions 592, 593, and 594 may be omitted as long as the protrusion portion 59 includes at least the first protrusion portion 591. Further, another protrusion portion may be provided.

### Support Substrate 6

As illustrated in FIG. 1, the support substrate 6 has functions of supporting the angular velocity sensor element 5 and electrically coupling the angular velocity sensor element 5 to the terminal T92 on the base 21. In this manner, by interposing the support substrate 6 between the base 21 and the angular velocity sensor element 5, thermal stress or impact is less likely to be applied to the angular velocity sensor element 5, and the detection accuracy of the angular velocity ωz by the angular velocity sensor element 5 is improved.

The support substrate 6 is a substrate for tape automated bonding (TAB) mounting, and supports the angular velocity sensor element 5 from a lower side so as to lift the angular velocity sensor element 5. As illustrated in FIG. 11, the support substrate 6 includes a substrate 61 and eight leads 62 disposed on the substrate 61. The substrate 61 has a frame shape in a plan view from the Z-axis direction, and has an opening 611 in the central portion. The substrate 61 consists of a film formed of an insulating resin such as polyimide. However, the constituent material of the substrate 61 is not particularly limited, and for example, can be formed of an insulating resin other than polyimide. Such a substrate 61 is fixed to the bottom surface of the first recessed portion 211a by a plurality of (eight) bonding members B1 at both end portions in the X-axis direction. Further, each lead 62 is electrically coupled to the terminal T92 formed on the bottom surface of the first recessed portion 211a via the bonding member B1.

The eight leads 62 are bonding leads that support the angular velocity sensor element 5, and are wiring patterns having conductivity. In the present embodiment, each of the leads 62 is formed of metal foil such as copper foil. As a result, the lead 62 can be easily formed. Each of these leads 62 has a base end portion supported on a lower surface of the substrate 61. In addition, each of the leads 62 is bent in the Z-axis direction in the middle of the extending direction to be inclined upward, and a tip end portion thereof is positioned above the substrate 61 through the opening 611 (refer to FIG. 1). The base portion 50 of the angular velocity sensor element 5 is bonded to the tip end portion of each lead 62 via a conductive bonding member B2. Eight leads 62 are electrically coupled to the drive-electrode terminal T1, the drive-constant-potential-electrode terminal T2, the first detection-electrode terminal T3, the second detection-electrode terminal T4, the third detection-electrode terminal T5, the fourth detection-electrode terminal T6, the first constant potential electrode E71, and the second constant potential electrode E72. The bonding member B2 of the present embodiment is a gold bump. However, the bonding member B2 is not limited thereto, and may be, for example, silver paste, solder, a conductive adhesive, or the like.

Although the support substrate 6 has been described above, the configuration of the support substrate 6 is not particularly limited.

### Acceleration Sensor Unit 3

The acceleration sensor unit 3 is a three-axis acceleration sensor unit that can independently detect acceleration Ax in the X-axis direction, acceleration Ay in the Y-axis direction, and acceleration Az in the Z-axis direction. According to such a configuration, the physical quantity detection device 1 having a larger number of detection axes is obtained, and the convenience thereof increases. In addition, the acceleration sensor unit 3 is silicon micro electro mechanical systems (MEMS). According to such a configuration, the size of the acceleration sensor unit 3 can be reduced.

As illustrated in FIG. 12, the acceleration sensor unit 3 includes a support substrate 31, a first sensor portion 32 and a second sensor portion 33 supported by the support substrate 31, and a lid 34 that is bonded to the support substrate 31 and accommodates the first and second sensor portions 32 and 33 between the lid 34 and the support substrate 31. Among these, the support substrate 31 and the first and second sensor portions 32 and 33 are integrally formed from, for example, a silicon on insulator (SOI) substrate. Specifically, the support substrate 31 is formed from the entire SOI substrate, and the first and second sensor portions 32 and 33 are formed from an upper silicon layer (device layer). In addition, the lid 34 is formed of a silicon substrate, and the lower surface thereof is bonded to the upper surface of the support substrate 31 via a bonding member (not illustrated). According to such a configuration, the acceleration sensor unit 3 can be easily and accurately manufactured by a manufacturing method conforming to a silicon semiconductor process.

The support substrate 31 has a first recessed portion 311 and a second recessed portion 312 that are open through the upper surface. The first and second recessed portions 311 and 312 are disposed to be aligned in the X-axis direction. The first recessed portion 311 is disposed to overlap the first sensor portion 32 in a plan view from the Z-axis direction, and functions as an escape portion for avoiding contact with the first sensor portion 32. On the other hand, the second recessed portion 312 is disposed to overlap the second sensor portion 33 in a plan view from the Z-axis direction, and functions as an escape portion for avoiding contact with the second sensor portion 33. Further, the support substrate 31 has a first columnar anchor 313 erected at the central portion of a bottom surface of the first recessed portion 311 and a second columnar anchor 314 erected at the central portion of a bottom surface of the second recessed portion 312. The first sensor portion 32 is fixed to an upper surface of the first anchor 313, and the second sensor portion 33 is fixed to an upper surface of the second anchor 314.

The first sensor portion 32 is a sensor portion that detects the acceleration Az in the Z-axis direction. As illustrated in FIG. 13, the first sensor portion 32 includes a movable portion 321, a first fixed body 322, and a second fixed body 323. Each of the movable portion 321, the first fixed body 322, and the second fixed body 323 is fixed to the upper surface of the first anchor 313. In FIG. 13, each portion is provided with hatching for easy understanding, but this does not represent a cross-section.

In addition, the first fixed body 322 includes a first fixed comb electrode 322a positioned on a positive side in the X-axis direction with respect to the first anchor 313. On the other hand, the second fixed body 323 includes a second fixed comb electrode 323a positioned on a negative side in the X-axis direction with respect to the first anchor 313.

In addition, the movable portion 321 includes a spring portion 321a extending from the first anchor 313 to both sides in the Y-axis direction, and a movable plate 321b supported by the first anchor 313 via the spring portion 321a and swinging around a swing axis J along the Y-axis according to an elastic deformation of the spring portion 321a with respect to the support substrate 31. Further, the movable plate 321b includes a first movable comb electrode 321c that meshes with the first fixed comb electrode 322a and a second movable comb electrode 321d that meshes with the second fixed comb electrode 323a. Further, the movable plate 321b is asymmetric with respect to the swing axis J, and a mass of a portion on the negative side in the X-axis direction with respect to the swing axis J is larger than a mass of a portion on the positive side in the X-axis direction.

In the first sensor portion 32 having such a configuration, a first capacitance is formed between the first fixed comb electrode 322a and the first movable comb electrode 321c, and a second capacitance is formed between the second fixed comb electrode 323a and the second movable comb electrode 321d. When the acceleration Az in the Z-axis direction is applied, the movable plate 321b swings around the swing axis J while elastically deforming the spring portion 321a in correspondence with a magnitude and a direction of the applied acceleration Az, and the first and second capacitances change in combination with this swing. Therefore, the applied acceleration Az can be detected based on the change in the first and second capacitances.

The second sensor portion 33 is a sensor portion that independently detects the acceleration Ax in the X-axis direction and the acceleration Ay in the Y-axis direction. As illustrated in FIG. 14, the second sensor portion 33 includes a movable portion 331, a first fixed body 332, a second fixed body 333, a third fixed body 334, and a fourth fixed body 335. Each of the movable portion 331, the first fixed body 332, the second fixed body 333, the third fixed body 334, and the fourth fixed body 335 is fixed to the upper surface of the second anchor 314. In FIG. 14, each portion is provided with hatching for easy understanding, but this does not represent a cross-section.

In addition, the first fixed body 332 includes a first fixed comb electrode 332a positioned on a positive side in the X-axis direction with respect to the second anchor 314. The second fixed body 333 includes a second fixed comb electrode 333a positioned on a negative side in the X-axis direction with respect to the second anchor 314. The first and second fixed bodies 332 and 333 are arranged symmetrically with respect to the second anchor 314.

In addition, the third fixed body 334 includes a third fixed comb electrode 334a positioned on a positive side in the Y-axis direction with respect to the second anchor 314. Further, the fourth fixed body 335 includes a fourth fixed comb electrode 335a positioned on a negative side in the Y-axis direction with respect to the second anchor 314. The third and fourth fixed bodies 334 and 335 are disposed symmetrically with respect to the second anchor 314.

In addition, the movable portion 331 includes four spring portions 331a that radially extend from the second anchor 314, and a frame-shaped movable plate 331b that is supported by the second anchor 314 via the spring portions 331a and is displaced in the X-axis direction and the Y-axis direction with respect to the support substrate 31 by an elastic deformation of the spring portions 331a. In addition, the movable plate 331b includes a first movable comb electrode 331c that meshes with the first fixed comb electrode 332a, a second movable comb electrode 331d that meshes with the second fixed comb electrode 333a, a third movable comb electrode 331e that meshes with the third fixed comb electrode 334a, and a fourth movable comb electrode 331f that meshes with the fourth fixed comb electrode 335a.

In the second sensor portion 33 having such a configuration, a first capacitance is formed between the first fixed comb electrode 332a and the first movable comb electrode 331c, a second capacitance is formed between the second fixed comb electrode 333a and the second movable comb electrode 331d, a third capacitance is formed between the third fixed comb electrode 334a and the third movable comb electrode 331e, and a fourth capacitance is formed between the fourth fixed comb electrode 335a and the fourth movable comb electrode 331f. When the acceleration Ax in the X-axis direction is applied, the movable plate 331b is displaced in the X-axis direction while elastically deforming the spring portions 331a in correspondence with a magnitude and a direction of the applied acceleration Ax, and the first and second capacitances change in conjunction with the displacement. At this time, the third and fourth capacitances do not substantially change. Therefore, the applied acceleration Ax can be detected based on the change in the first and second capacitances. On the other hand, when the acceleration Ay in the Y-axis direction is applied, the movable plate 331b is displaced in the Y-axis direction while elastically deforming the spring portions 331a in correspondence with a magnitude and a direction of the applied acceleration Ay, and the third and fourth capacitances change in conjunction with the displacement. At this time, the first and second capacitances do not substantially change. Therefore, the applied acceleration Ay can be detected based on the change in the third and fourth capacitances.

As illustrated in FIG. 12, the lid 34 has a recessed portion 341 that is open through the lower surface. The first and second sensor portions 32 and 33 are accommodated in the recessed portion 341 and are bonded to the upper surface of the support substrate 31.

Here, as illustrated in FIG. 2, the support substrate 31 is larger than the lid 34, and a part of the upper surface protrudes from the lid 34. A plurality of terminals T94 which are electrically coupled to the first and second sensor portions 32 and 33 are disposed in the protruding portion. Each of the terminals T94 is electrically coupled to the circuit element 7 via conductive wires W2.

Hereinbefore, the acceleration sensor unit 3 has been described. However, the configuration of the acceleration sensor unit 3 is not particularly limited. For example, the second sensor portion 33 may be configured to detect only one of the accelerations Ax and Ay. In addition, for example, the first and second sensor portions 32 and 33 may have the same configuration as each other, such as both detecting the acceleration Az. Further, for example, the sensor unit may have three sensor portions, that is, a sensor portion that detects the acceleration Ax, a sensor portion that detects the acceleration Ay, and a sensor portion that detects the acceleration Az. Further, the acceleration sensor unit 3 may be omitted.

### Circuit Element 7

As illustrated in FIG. 1, the circuit element 7 is bonded and fixed to a bottom surface of a third recessed portion 211c via a bonding member (not illustrated). The acceleration sensor unit 3 is stacked on the upper surface of the circuit element 7 to form a stack H. In addition, as illustrated in FIG. 2, the circuit element 7 is electrically coupled to the terminal T91 disposed on a bottom surface of the second recessed portion 211b via a conductive wire W1. However, the configuration is not limited thereto, and the stack H may be configured by bonding the acceleration sensor unit 3 to the bottom surface of the third recessed portion 211c and stacking the circuit element 7 on the upper surface of the acceleration sensor unit 3, contrary to the present embodiment.

In addition, the circuit element 7 is electrically coupled to the acceleration sensor unit 3 and the angular velocity sensor element 5 via the base 21, and signals from the acceleration sensor unit 3 and the angular velocity sensor element 5 are input to the circuit element 7. The circuit element 7 is, for example, a micro controller unit (MCU), and integrally controls each portion of the physical quantity detection device 1. As illustrated in FIG. 1, the circuit element 7 includes a first control circuit portion 71 that controls the drive of the acceleration sensor unit 3 and detects the accelerations Ax, Ay, and Az based on the signal input from the acceleration sensor unit 3, a second control circuit portion 72 that controls the drive of the angular velocity sensor element 5 and detects the angular velocity ωz based on the signal input from the angular velocity sensor element 5, and an interface circuit portion 73 that communicates with an external device.

Further, as illustrated in FIG. 15, the second control circuit portion 72 has a drive circuit 79 for applying a drive signal to the angular velocity sensor element 5 to drive the angular velocity sensor element 5, and a detection circuit 75 for detecting the angular velocity ωz based on the detection signal from the angular velocity sensor element 5. The detection circuit 75 includes a charge amplifier 751, a charge amplifier 752, a differential amplifier circuit 753, an AC amplifier circuit 754, a synchronous detection circuit 755, a smoothing circuit 756, a variable amplifier circuit 757, and a filter circuit 758.

The charge amplifier 751 is configured to include an operational amplifier, a feedback resistor, and a feedback capacitance. A first detection signal output from the first detection electrode E3 and a fourth detection signal output from the fourth detection electrode E6 are input to an inverting input terminal (- terminal) of the operational amplifier, and a non-inverting input terminal (+ terminal) of the operational amplifier is fixed to a reference potential. Note that the first and fourth detection signals have the same electrical polarity. The charge amplifier 751 converts the first detection signal and the fourth detection signal input to the operational amplifier into an AC voltage signal.

The charge amplifier 752 is configured to include an operational amplifier, a feedback resistor, and a feedback capacitance. A second detection signal output from the second detection electrode E4 and a third detection signal output from the third detection electrode E5 are input to an inverting input terminal (- terminal) of the operational amplifier, and a non-inverting input terminal (+ terminal) of the operational amplifier is fixed to a reference potential. Note that the second and third detection signals have the same electrical polarity. Further, the second and third detection signals are opposite in electrical polarity to the first and fourth detection signals. The charge amplifier 752 converts the second detection signal and the third detection signal input to the operational amplifier into an AC voltage signal.

Output signals of the charge amplifiers 751 and 752 are input to the differential amplifier circuit 753. The differential amplifier circuit 753 outputs a signal obtained by amplifying a potential difference between the output signal of the charge amplifier 751 and the output signal of the charge amplifier 752. The output signal of the differential amplifier circuit 753 is amplified by the AC amplifier circuit 754 and then input to the synchronous detection circuit 755. For example, the synchronous detection circuit 755 extracts the angular velocity component by synchronously detecting the output signal of the AC amplifier circuit 754 based on the drive signal generated by the drive circuit 79. A signal of the angular velocity component extracted by the synchronous detection circuit 755 is smoothed into a DC voltage signal by the smoothing circuit 756 and input to the variable amplifier circuit 757. The variable amplifier circuit 757 amplifies or attenuates the output signal of the smoothing circuit 756 at a set rate to change the angular velocity sensitivity. The signal amplified or attenuated by the variable amplifier circuit 757 is input to the filter circuit 758. The filter circuit 758 removes a highfrequency noise component outside the sensor band from the output signal of the variable amplifier circuit 757, and outputs a detection signal having a polarity and a voltage level corresponding to the direction and magnitude of the angular velocity ωz. Then, the detection signal is output from the interface circuit portion 73 to the outside of the device.

In such a detection circuit 75, the input signal of the charge amplifier 751 is a signal obtained by adding the first detection signal and the fourth detection signal. Since the first and fourth detection signals are signals having the same electrical polarity and the same phase, the amplitude of the input signal of the charge amplifier 751 is the sum of the amplitude of the first detection signal and the amplitude of the fourth detection signal. Similarly, the input signal of the charge amplifier 752 is a signal obtained by adding the second detection signal and the third detection signal. Since the second and third detection signals are signals having the same electrical polarity and the same phase, the amplitude of the input signal of the charge amplifier 752 is the sum of the amplitude of the second detection signal and the amplitude of the third detection signal.

The input signal of the charge amplifier 751 and the input signal of the charge amplifier 752 are in an antiphase relationship in which the electrical polarities are opposite to each other. Therefore, according to the detection circuit 75, compared to the configuration of the related art in which the fixed potential is supplied to the second and fourth detection electrodes E4 and E6, only the first detection signal is input to the charge amplifier 751, and only the third detection signal is input to the charge amplifier 752, when the structure of the angular velocity sensor element 5 is the same, the amount of charge (amount of current) input to the detection circuit 75 increases when the same angular velocity ωz is detected, and thus the detection sensitivity of the angular velocity ωz is improved. As a result, an S/N of the output signal of the detection circuit 75 is improved, and noise reduction can be achieved. Further, as the detection sensitivity increases, the temperature characteristic of the output signal of the detection circuit 75 also appears to be relatively small. Therefore, the physical quantity detection device 1 with high accuracy and high stability is obtained.

The physical quantity detection device 1 has been described above. Next, a method of manufacturing the angular velocity sensor element 5 will be described. As illustrated in FIG. 16, the method of manufacturing the angular velocity sensor element 5 includes a substrate preparation step S1 of preparing the vibrating substrate 500, a metal film forming step S2 of forming the metal film E on the vibrating substrate 500, and an electrode forming step S3 of forming an electrode by patterning the metal film E.

### Substrate Preparation Step S1

In the substrate preparation step, the vibrating substrate 500 is formed as illustrated in FIG. 17 by patterning a Z-cut quartz crystal substrate using a photolithography technique and an etching technique. As the etching technique, for example, dry etching, wet etching, or the like can be used.

### Metal Film Forming Step S2

In the metal film forming step S2, as illustrated in FIG. 18, a metal film E is formed on the entire front surface of the vibrating substrate 500 by using a film forming technique such as vapor deposition or sputtering.

### Electrode Forming Step S3

In the electrode forming step S3, first, a photoresist is formed on the metal film E. The photoresist may be either a negative type in which a portion sensitized by exposure forms a pattern, or a positive type in which a portion not sensitized by exposure forms a pattern. Next, the photoresist is exposed to light using a photomask. That is, when the photoresist is a negative type, a necessary portion is sensitized, whereas when the photoresist is of a positive type, an unnecessary portion is sensitized. Next, the photoresist is developed by being immersed in a developer, and unnecessary portions are removed. Thus, as illustrated in FIG. 19, a mask M corresponding to the electrode pattern is formed on the metal film E.

Here, as described above, in the angular velocity sensor element 5, it is not necessary to remove the metal film E from the vibrating substrate 500 on the side surface facing the positive side in the X-axis direction and the side surface facing the negative side in the X-axis direction. This is achieved by forming the first protrusion portion 591 and the second protrusion portion 592 on the side surface of the base portion 50 facing the X-axis direction and disposing the first and second wiring separation portions G1 and G2 on the side surfaces of the first protrusion portion 591 and the second protrusion portion 592 facing the Y-axis direction.

According to such a configuration, since it is not necessary to perform exposure on the side surface facing the positive side in the X-axis direction and the side surface facing the negative side in the X-axis direction, it is possible to reduce the number of exposures of the photoresist. Specifically, the process can be completed with a total of four exposures, including a step of exposing the photoresist on an upper surface of the vibrating substrate 500 by exposure from the positive side in the Z-axis direction, a step of exposing the photoresist on a lower surface of the vibrating substrate 500 by exposure from a negative side in the Z-axis direction, a step of exposing the photoresist on a side surface of the vibrating substrate 500 facing the positive side in the Y-axis direction by exposure from the positive side in the Y-axis direction, and a step of exposing the photoresist on a side surface of the vibrating substrate 500 facing a negative side in the Y-axis direction by exposure from the negative side in the Y-axis direction. Therefore, the angular velocity sensor element 5 can be easily manufactured.

Next, the metal film E is etched through the mask M to remove an unnecessary portion of the metal film E (a portion protruding from the mask M). Thus, the electrodes E1 to E7 and the terminals T1 to T6 are formed on the vibrating substrate 500. In particular, the fourth detection electrode E6 and the drive constant potential electrode E2 are separated by removing the metal film E on the side surface of the first protrusion portion 591 facing the negative side in the Y-axis direction, and the second detection electrode E4 and the drive constant potential electrode E2 are separated by removing the metal film E on the side surface of the second protrusion portion 592 facing the positive side in the Y-axis direction. Finally, the mask M is removed from the metal film E. As described above, the angular velocity sensor element 5 is obtained.

According to the method of manufacturing the angular velocity sensor element 5, the drive electrode E1 is less likely to approach any one of the first detection electrode E3, the second detection electrode E4, the third detection electrode E5, and the fourth detection electrode E6, and capacitive coupling therebetween can be effectively reduced. Therefore, a drive signal applied to the drive electrode E1 is less likely to be mixed into detection signals taken out from the first to fourth detection electrodes E3 to E6, and detection signals with reduced noise can be obtained. Therefore, the angular velocity sensor element 5 capable of more accurately detecting the angular velocity ωz is obtained.

The physical quantity detection device 1 has been described above. As described above, the angular velocity sensor element 5 included in the physical quantity detection device 1 includes the vibrating substrate 500 having the base portion 50, the plurality of vibrating arms coupled to the base portion 50, and the protrusion portion 59 protruding from the side surface of the base portion 50, and the first detection electrode E3, the second detection electrode E4, the third detection electrode E5, the fourth detection electrode E6, the drive electrode E1, and the drive constant potential electrode E2 disposed on any of the plurality of vibrating arms. In addition, the wiring separation portion G that separates any one of the first detection electrode E3, the second detection electrode E4, the third detection electrode E5, and the fourth detection electrode E6 from the drive constant potential electrode E2 is disposed on the side surface of the protrusion portion 59. In the plan view of the base portion 50, the drive electrode E1 is disposed on the side opposite to the wiring separation portion G side of the protrusion portion 59. According to such a configuration, the drive electrode E1 is less likely to approach any one of the first detection electrode E3, the second detection electrode E4, the third detection electrode E5, and the fourth detection electrode E6, and capacitive coupling therebetween can be effectively reduced. Therefore, a drive signal applied to the drive electrode E1 is less likely to be mixed into detection signals taken out from the first to fourth detection electrodes E3 to E6, and detection signals with reduced noise can be obtained. Therefore, the angular velocity sensor element 5 capable of more accurately detecting the angular velocity ωz is obtained.

In addition, as described above, the protrusion portion 59 includes the first protrusion portion 591 and the second protrusion portion 592, and the wiring separation portion G includes the first wiring separation portion G1 which is disposed in the first protrusion portion 591 and separates the second detection electrode E4 and the drive constant potential electrode E2, and the second wiring separation portion G2 which is disposed in the second protrusion portion 592 and separates the fourth detection electrode E6 and the drive constant potential electrode E2. The first wiring separation portion G1 is positioned on the side surface of the first protrusion portion 591 opposite to the second protrusion portion 592, and the second wiring separation portion G2 is positioned on the side surface of the second protrusion portion 592 opposite to the first protrusion portion 591. According to such a configuration, it is possible to effectively suppress the approach between the drive electrode E1 and the second detection electrode E4, and to effectively reduce the capacitive coupling therebetween. In addition, it is possible to effectively suppress the approach between the drive electrode E1 and the fourth detection electrode E6, and to effectively reduce the capacitive coupling therebetween.

In addition, as described above, the protrusion portion 59 includes the third protrusion portion 593 and the fourth protrusion portion 594 which are disposed on the side opposite to the first protrusion portion 591 and the second protrusion portion 592 with respect to the base portion 50. According to such a configuration, since the protrusion portion 59 can be disposed in a well-balanced manner with respect to the base portion 50, the deviation of the center of gravity from the center O can be effectively suppressed. Therefore, it is possible to suppress a decrease in the vibration balance of the angular velocity sensor element 5 in a drive vibration mode to be described later.

As described above, the plurality of vibrating arms include the first detection arm 51 and the second detection arm 52 coupled to the base portion 50. The first detection electrode E3 and the second detection electrode E4 are disposed on the first detection arm 51, and the third detection electrode E5 and the fourth detection electrode E6 are disposed on the second detection arm 52. According to such a configuration, it is possible to accurately detect the angular velocity ωz based on the first detection signal extracted from the first detection electrode E3, the second detection signal extracted from the second detection electrode E4, the third detection signal extracted from the third detection electrode E5, and the fourth detection signal extracted from the fourth detection electrode E6.

As described above, the plurality of vibrating arms include the first coupling arm 53 and the second coupling arm 54 coupled to the base portion 50, the first drive arms 55 and 56 coupled to the first coupling arm 53, and the second drive arms 57 and 58 coupled to the second coupling arm 54, and the drive electrode E1 and the drive constant potential electrode E2 are disposed in the first drive arms 55 and 56 and the second drive arms 57 and 58, respectively. The vibrating substrate 500 has the base portion 50, the first detection arm 51 extending from the base portion 50 to one side in the Y-axis direction as a first direction, the second detection arm 52 extending from the base portion 50 to the other side in the Y-axis direction, the first coupling arm 53 extending from the base portion 50 to one side in the X-axis direction as a second direction orthogonal to the Y-axis direction, the second coupling arm 54 extending from the base portion 50 to the other side in the X-axis direction, a pair of first drive arms 55 and 56 extending from the first coupling arm 53 to both sides in the Y-axis direction, and a pair of second drive arms 57 and 58 extending from the second coupling arm 54 to both sides in the Y-axis direction. According to such a configuration, the angular velocity sensor element 5 having excellent vibration balance can be obtained, and the angular velocity ωz can be accurately detected.

As described above, the physical quantity detection device 1 includes the circuit element 7 including the angular velocity sensor element 5 as the physical quantity detection element, the drive circuit 79 which drives the angular velocity sensor element 5, and the detection circuit 75 which detects the angular velocity ωz as the physical quantity based on the detection signal from the angular velocity sensor element 5. According to such a configuration, since the effects of the angular velocity sensor element 5 described above can be obtained, the physical quantity detection device 1 can accurately detect the angular velocity ωz.

Further, as described above, the method of manufacturing the angular velocity sensor element 5 includes the substrate preparation step S1 of preparing the vibrating substrate 500 having the base portion 50, the plurality of vibrating arms coupled to the base portion 50, and the protrusion portion 59 protruding from the side surface of the base portion 50, the metal film forming step S2 of forming the metal film E on the vibrating substrate 500, and the electrode forming step S3 of forming the first detection electrode E3, the second detection electrode E4, the third detection electrode E5, the fourth detection electrode E6, the drive electrode E1, and the drive constant potential electrode E2 by patterning the metal film E. Then, in the electrode forming step S3, the metal film E positioned on the side surface of the protrusion portion 59 is removed, thereby separating any of the first detection electrode E3, the second detection electrode E4, the third detection electrode E5, and the fourth detection electrode E6 from the drive constant potential electrode E2. According to such a manufacturing method, the drive electrode E1 is less likely to approach any one of the first detection electrode E3, the second detection electrode E4, the third detection electrode E5, and the fourth detection electrode E6, and capacitive coupling therebetween can be effectively reduced. Therefore, a drive signal applied to the drive electrode E1 is less likely to be mixed into detection signals taken out from the first to fourth detection electrodes E3 to E6, and detection signals with reduced noise can be obtained. Therefore, the angular velocity sensor element 5 capable of more accurately detecting the angular velocity ωz is obtained.

### Second Embodiment

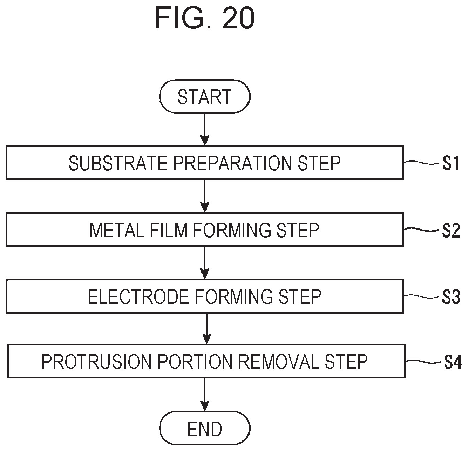

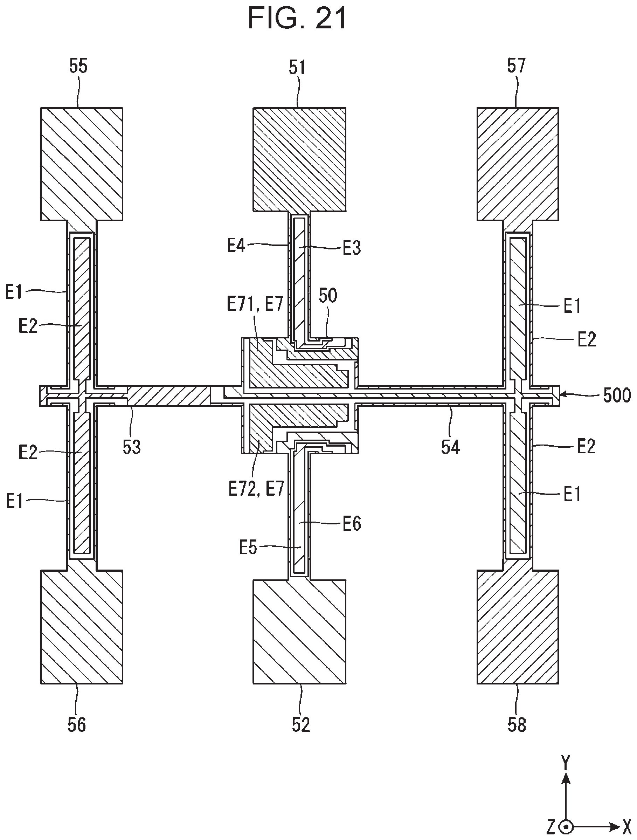

FIG. 20 is a flowchart illustrating a manufacturing process of the angular velocity sensor element according to a second embodiment. FIG. 21 is a top view for describing a method of manufacturing the angular velocity sensor element.

In the present embodiment, except that a manufacturing method of the angular velocity sensor element 5 is different, the physical quantity detection device 1 is the same as the physical quantity detection device 1 of the first embodiment described above. In the following description, the present embodiment will be described with focus given to differences from the embodiment described above, and description of the same matters will be omitted. In addition, in each of the drawings of the present embodiment, the same reference numerals are assigned to the same configurations as those of the embodiment described above.

As illustrated in FIG. 20, the method of manufacturing the angular velocity sensor element 5 of the present embodiment further includes a protrusion portion removal step S4 of removing the protrusion portion 59 performed after the electrode forming step S3. Since the steps up to the electrode forming step S3 are the same as those of the first embodiment, only the protrusion portion removal step S4 will be described below.

### Protrusion Portion Removal Step S4

In the protrusion portion removal step S4, as illustrated in FIG. 21, the first, second, third, and fourth protrusion portions 591, 592, 593, and 594 are removed. In this manner, by removing the first protrusion portion 591, even in a case where the formation of the first wiring separation portion G1 is incomplete and the fourth detection electrode E6 and the drive constant potential electrode E2 are not separated from each other, it is possible to reliably separate the fourth detection electrode E6 and the drive constant potential electrode E2 from each other. Similarly, by removing the second protrusion portion 592, even in a case where the formation of the second wiring separation portion G2 is incomplete and the second detection electrode E4 and the drive constant potential electrode E2 are not separated from each other, it is possible to reliably separate the second detection electrode E4 and the drive constant potential electrode E2 from each other. Therefore, it is possible to improve a yield of the angular velocity sensor element 5. Further, by removing the third and fourth protrusion portions 593 and 594, it is possible to suppress a decrease in the vibration balance of the angular velocity sensor element 5.

As described above, the method of manufacturing the angular velocity sensor element 5 according to the present embodiment includes the protrusion portion removal step S4 of removing the protrusion portion 59 performed after the electrode forming step S3. According to such a method, it is possible to improve the yield of the angular velocity sensor element 5.

Even in such a second embodiment, the same effect as that of the first embodiment described above can be exhibited.

Although the physical quantity detection element, the physical quantity detection device, and the method of manufacturing the physical quantity detection element according to the present disclosure have been described based on the embodiments illustrated in the drawings, the present disclosure is not limited thereto, and the configuration of each portion can be replaced with any configuration having the same function. Further, each step can be replaced with any step having a similar function. Additionally, any other configuration or step may be added to the present disclosure. In addition, each embodiment may be combined as appropriate.

In the embodiments described above, the angular velocity sensor element that detects the angular velocity ωz is used as the physical quantity detection element, but the physical quantity detection element is not limited thereto. For example, the physical quantity detection element may be an angular velocity sensor element that detects an angular velocity around the X-axis or an angular velocity sensor element that detects an angular velocity around the Y-axis. In addition, the detected physical quantity is not limited to the angular velocity, and may be acceleration, pressure, or the like.

## Claims

1. A physical quantity detection element comprising:
a vibrating substrate including a base portion, a plurality of vibrating arms coupled to the base portion, and a protrusion portion protruding from a side surface of the base portion; and
a first detection electrode, a second detection electrode, a third detection electrode, a fourth detection electrode, a drive electrode, and a drive constant potential electrode disposed on any one of the plurality of vibrating arms, wherein
a wiring separation portion configured to separate any one of the first detection electrode, the second detection electrode, the third detection electrode, and the fourth detection electrode from the drive constant potential electrode is disposed on a side surface of the protrusion portion, and
the drive electrode is disposed, in a plan view of the base portion, on a side opposite to the wiring separation portion side of the protrusion portion.

2. The physical quantity detection element according to claim 1, wherein
the protrusion portion includes a first protrusion portion and a second protrusion portion,
the wiring separation portion includes
a first wiring separation portion disposed in the first protrusion portion and separating the second detection electrode and the drive constant potential electrode, and
a second wiring separation portion disposed in the second protrusion portion and separating the fourth detection electrode and the drive constant potential electrode,
the first wiring separation portion is positioned on a side surface of the first protrusion portion opposite to the second protrusion portion, and
the second wiring separation portion is positioned on a side surface of the second protrusion portion opposite to the first protrusion portion.

3. The physical quantity detection element according to claim 2, wherein
the protrusion portion includes
a third protrusion portion and a fourth protrusion portion disposed on a side of the base portion opposite to the first protrusion portion and the second protrusion portion.

4. The physical quantity detection element according to claim 3, wherein
the plurality of vibrating arms include a first detection arm and a second detection arm coupled to the base portion,
the first detection electrode and the second detection electrode are disposed on the first detection arm, and
the third detection electrode and the fourth detection electrode are disposed on the second detection arm.

5. The physical quantity detection element according to claim 4, wherein
the plurality of vibrating arms include a first coupling arm and a second coupling arm coupled to the base portion, a first drive arm coupled to the first coupling arm, and a second drive arm coupled to the second coupling arm,
the drive electrode and the drive constant potential electrode are disposed on each of the first drive arm and the second drive arm, and
the vibrating substrate includes the base portion,
the first detection arm extending from the base portion to one side in a first direction,
the second detection arm extending from the base portion to another side in the first direction,
the first coupling arm extending from the base portion to one side in a second direction orthogonal to the first direction,
the second coupling arm extending from the base portion to another side in the second direction,
a pair of first drive arms extending from the first coupling arm to both sides in the first direction, and
a pair of second drive arms extending from the second coupling arm to both sides in the first direction.

6. A physical quantity detection device comprising:
the physical quantity detection element according to claim 1; and
a circuit element including a drive circuit configured to drive the physical quantity detection element and a detection circuit configured to detect a physical quantity based on a detection signal from the physical quantity detection element.

7. A method of manufacturing a physical quantity detection element comprising:
a substrate preparation step of preparing a vibrating substrate including a base portion, a plurality of vibrating arms coupled to the base portion, and a protrusion portion protruding from a side surface of the base portion;
a metal film forming step of forming a metal film on the vibrating substrate; and
an electrode forming step of forming a first detection electrode, a second detection electrode, a third detection electrode, a fourth detection electrode, a drive electrode, and a drive constant potential electrode by patterning the metal film, wherein
in the electrode forming step, one of the first detection electrode, the second detection electrode, the third detection electrode, and the fourth detection electrode is separated from the drive constant potential electrode by removing the metal film positioned on a side surface of the protrusion portion.

8. The method of manufacturing a physical quantity detection element according to claim 7, further comprising:
a protrusion portion removal step of removing the protrusion portion, the protrusion portion removal step being performed after the electrode forming step.
